Europäisches Patentamt

European Patent Office

Office européen des brevets

(19)

(11) Veröffentlichungsnummer: **0 196 718**
**B1**

(12) # EUROPÄISCHE PATENTSCHRIFT

(45) Veröffentlichungstag der Patentschrift:
27.06.90

(51) Int. Cl.⁵: **C03B 19/04, C03B 37/012**

(21) Anmeldenummer: 86200484.3

(22) Anmeldetag: 21.03.86

(54) Verfahren und Vorrichtungen zur Herstellung von Glaskörpern.

(30) Priorität: 29.03.85 DE 3511456

(43) Veröffentlichungstag der Anmeldung:
08.10.86 Patentblatt 86/41

(45) Bekanntmachung des Hinweises auf die Patenterteilung:
27.06.90 Patentblatt 90/26

(84) Benannte Vertragsstaaten:
DE FR GB IT NL SE

(56) Entgegenhaltungen:
EP-A- 0 029 590
EP-A- 0 129 625

(73) Patentinhaber: Philips Patentverwaltung GmbH,
Wendenstrasse 35 Postfach 10 51 49,
D-2000 Hamburg 1(DE)

(84) Benannte Vertragsstaaten: DE

(73) Patentinhaber: N.V. Philips' Gloeilampenfabrieken,
Groenewoudseweg 1, NL-5621 BA Eindhoven(NL)

(84) Benannte Vertragsstaaten: FR GB IT NL SE

(72) Erfinder: Clasen, Rolf, Dipl.-Phys., Dr.,
Schlossparkstrasse 36, D-5100 Aachen(DE)
Erfinder: Hermann, Wilhelm Georg, Dr., Mühlenstrasse 1,
D-5106 Roetgen(DE)

(74) Vertreter: Nehmzow-David, Fritzi-Maria et al, Philips
Patentverwaltung GmbH
Wendenstrasse 35 Postfach 10 51 49,
D-2000 Hamburg 1(DE)

**Beschreibung**

Die Erfindung betrifft ein Verfahren zur Herstellung von Glaskörpern, bei dem aus dem Ausgangsmaterial für den Glaskörper in Form einer wasserfreien Suspension mit hochdispersem Feststoffanteil ein poröser Grünkörper geformt und dieser anschließend gereinigt und gesintert wird.

Die Erfindung bezieht sich weiter auf Vorrichtungen zur Durchführung eines solchen Verfahrens, wie sie in den Oberbegriffen der Ansprüche 21, 23 und 24 angegeben und als solche bekannt sind.

Das eingangs genannte Verfahren ist als solches bekannt und ist insbesondere geeignet zur Herstellung von Vorformen für optische Wellenleiter aus Quarzglas.

Zur Herstellung von hochreinen Quarzglaskörpern, insbesondere Vorformen für optische Wellenleiter, sind Verfahren bekannt, bei denen ein poröser Grünkörper aus hochdispersen $SiO_2$-Glasteilchen hergestellt wird, wonach dieser poröse Grünkörper zunächst in z.B. einer chlorhaltigen Atmosphäre bei Temperaturen im Bereich von 600 bis 900°C gereinigt wird. Die Sinterung zu kompaktem, transparentem Glas erfolgt dann bei Temperaturen im Bereich um 1500°C; die Höhe der Sintertemperatur ist abhängig von der Größe der $SiO_2$-Teilchen und der Homogenität des Grünkörpers.

Bei der Verarbeitung von hochdispersen Quarzglaspartikeln ist ein erheblicher apparativer Aufwand (Vorformen für die Herstellung eines handhabbaren Grünkörpers und Pressen für die Verdichtung dieses Grünkörpers) erforderlich, um schließlich einen Grünkörper zu erhalten, der die für eine effiziente Sinterung, d.h. Sinterung bei Temperaturen ≤ 1550°C zu einem blasen- und schlierenfreien Glaskörper, ausreichende hohe Dichte aufweist. Ein derartiges Verfahren zur Herstellung einer Vorform für optische Wellenleiter ist z.B. aus DE-C 32 40 355 bekannt.

Um Grünkörper ausreichender Dichte herstellen zu können, ist es auch bekannt, von hochdispersen $SiO_2$-Suspensionen auszugehen, die zu einem Grünkörper verformt werden. Aus DE-A 29 25 309 ist ein Verfahren bekannt, bei dem eine $SiO_2$-Suspension in oder auf ein Trägerrohr aufgesprüht wird. Nachteilig bei diesem Verfahren ist, daß einmal hohe Anforderungen an eine gleichmäßig arbeitende Sprühvorrichtung gestellt werden müssen und daß eine Reinigung des erhaltenen Grünkörpers in einer Verunreinigungen bindenden heißen Gasatmosphäre nicht möglich ist, da das Trägerrohr nicht porös ist.

Der Erfindung liegt die Aufgabe zugrunde, ein Verfahren und Vorrichtungen der eingangs genannten Art zur Herstellung von hochreinen Glaskörpern zu schaffen, mit denen ein Grünkörper erhalten wird, der porös genug ist, daß er in einem Zwischenerhitzungsschritt in einer mit vorliegenden Verunreinigungen reagierenden Gasatmosphäre gut gereinigt werden kann, der jedoch eine so hohe Verdichtung aufweist, daß der anschließende Sinterschritt ohne zusätzliche Verdichtungsmaßnahmen des gereinigten Grünkörpers erfolgen kann.

Diese Aufgabe wird mit dem erfindungsgemäßen Verfahren dadurch gelöst, daß der Grünkörper durch Trennung der Phasen der Suspension an einer, der Form des herzustellenden Glaskörpers entsprechenden Abscheideelektrode mittels Elektrophorese abgeschieden wird.

Vorrichtungen zur Durchführung dieses Verfahrens sind gekennzeichnet durch

1. eine der Form des herzustellenden Grünkörpers entsprechende Abscheideelektrode, die in die im Gefäß enthaltene Suspension eintaucht, mit einer in Form und Größe der Abscheideelektrode entsprechenden, im Gefäß in einem Abstand zur Abscheideelektrode angeordneten Gegenelektrode und mit einer Spannungsquelle, die mit der Gegenelektrode und der Abscheideelektrode über Elektrodenanschlüsse elektrisch verbunden ist

2. ein der Form des herzustellenden Grünkörpers entsprechendes, die nach Phasen zu trennende Suspension enthaltendes, als Abscheideelektrode wirkendes Rohr mit einem elektrisch isolierenden Boden, in das eine zu allen Punkten der Abscheideoberfläche äquidistante Innenelektrode als Gegenelektrode eintaucht, wobei die Innenelektrode und das Rohr über Elektrodenanschlüsse elektrisch mit einer Spannungsquelle verbunden sind oder

3. eine der Form des herzustellenden Grünkörpers entsprechende, in die im Gefäß enthaltene Flüssigkeit eintauchende und von dieser Flüssigkeit durchsetzte, als Zwischenelektrode wirksame poröse Membran mit Poren eines Durchmessers kleiner als der mittlere Teilchendurchmesser des Feststoffanteils der in der Vorrichtung nach Phasen zu trennenden Suspension, auf der der Feststoffanteil der Suspension abgeschieden wird und vor deren, der Abscheideoberfläche gegenüberliegenden Hauptfläche eine vorzugsweise verschiebbare Elektrode in einem Abstand angeordnet ist, mit einem, in die Membran hineinragenden, verschiebbaren Zulaufrohr aus elektrisch leitendem Material, über welches die Suspension in die Membran einleitbar ist und mit einer Spannungsquelle, die mit dem Zulaufrohr und mit der über die Membran vorzugsweise verschiebbaren Elektrode über Elektrodenanschlüsse elektrisch verbunden ist.

Nach einer vorteilhaften Weiterbildung des Verfahrens nach der Erfindung wird als Ausgangsmaterial für den Glaskörper eine Suspension eingesetzt, die $SiO_2$-Partikel eines Durchmessers von 10 bis 500 nm, vorzugsweise 15 bis 100 nm, mit einem mittleren Teilchendurchmesser von 40 nm enthält, wobei als Dispergierflüssigkeit eine elektrisch schwach leitende, wasserfreie Flüssigkeit, insbesondere Äthanol eingesetzt wird. Zur Abscheidung von makroporenfreien Schichten ist es zweckmäßig, als Dispergierflüssigkeit eine wasserfreie, organische Flüssigkeit einzusetzen. Bei wässerigen Suspensionen ergibt sich nämlich das Problem, daß an der Anode nicht nur die negativ geladenen Feststoffpartikel, insbesondere sind dies Quarzglasteilchen, abgeschieden werden, sondern es wird bei der Abscheidung bei Spannungen > 1V gleichzeitig Sauerstoff frei, der sich ebenfalls an der Anode abscheidet und damit in die anwachsende Feststoffschicht eingebaut wird und zu Poren innerhalb des auf diese Weise gebildeten Grünkörpers führt, die unerwünscht sind.

Nach weiteren vorteilhaften Ausgestaltungen der Erfindung wird der Suspension ein ionogener, wasserfreier Zusatzstoff, der den pH-Wert der Suspension in Richtung auf den basischen Bereich (pH $\leq$ 10) verschiebt, zugegeben. Hierzu wird vorzugsweise eine quartäre Ammoniumverbindung, vorzugsweise Tetramethylammoniumhydroxid (TMAH) in einer Menge von 0,1 bis 5 Gew.%, bezogen auf den Feststoffanteil an der Dispergierflüssigkeit in der Suspension, zugesetzt. Dieser Zusatzstoff ist leicht flüchtig und ist in einem nachfolgenden Reinigungs-Erhitzungsschritt rückstandslos aus dem Grünkörper zu entfernen, so daß Quarzglaskörper einer sehr hohen Reinheit herstellbar sind. Durch den Zusatz einer Ammoniumverbindung, beispielsweise TMAH, werden Grünkörper einer relativ hohen Festigkeit erreicht, da an den Kontaktstellen zweier $SiO_2$-Primärpartikel eine Gelbildung auftritt. $SiO_2$ wird an den Kontaktstellen ausgeschieden und bildet eine Brückenschicht, da $SiO_2$ in TMAH geringfügig löslich ist.

Nach einer weiteren vorteilhaften Ausgestaltung des Verfahrens nach der Erfindung wird auf der Abscheideelektrode ein Schichtkörper durch Abscheiden mehrerer Schichten nacheinander aus unterschiedlich dotierten Suspensionen abgeschieden. Dazu wird nach Erreichen einer gewünschten Schichtdicke des Grünkörpers die erste Suspension aus der Vorrichtung entfernt und der Abscheideprozeß mit einer zweiten, z.B. anders als die erste Suspension dotierten Suspension fortgesetzt. Das vorliegende Verfahren ist damit besonders geeignet, Vorformen für optische Wellenleiter herzustellen, die ein Stufenprofil des Brechungsindex aufweisen. Ebenfalls ist es möglich, einen optischen Wellenleiter mit W-Profil durch Einbau einer Zwischenschicht mit niedrigerem Brechungsindex, der durch Anwendung einer Suspension mit entsprechender Dotierung erhalten wird, herzustellen. Dotierstoffe zur Veränderung des Brechungsindex eines Glaskörpers sind dem Fachmann bekannt; beispielsweise werden hierzu zur Erhöhung des Brechungsindex $GeO_2$ oder $Al_2O_3$ und zur Erniedrigung des Brechungsindex $B_2O_3$ oder Fluor verwendet. Mit dem vorliegenden Verfahren ist es auch möglich, durch Abscheidung einer Vielzahl von abgestuft dotierten Schichten einen Quarzglaskörper mit angenähert kontinuierlichem Verlauf des Brechungsindex herzustellen.

Nach einer weiteren vorteilhaften Ausgestaltung des Verfahrens nach der Erfindung wird eine, in einem Gefäß mit einer leitenden Flüssigkeit befindliche und von dieser leitenden Flüssigkeit durchsetzte, als Zwischenelektrode wirksame poröse Membran in Form eines porösen Grünkörpers aus dem Ausgangsmaterial für den herzustellenden Glaskörper mit Poren eines Durchmessers kleiner als der mittlere Teilchendurchmesser des Feststoffanteils der in der Vorrichtung nach Phasen zu trennenden Suspension, in die die Suspension über ein verschiebbares, elektrisch leitendes, mit einem Elektrodenanschluß versehenes Zulaufrohr eingeleitet wird und auf der der Feststoffanteil der Suspension elektrophoretisch abgeschieden wird, eingesetzt, wobei die Abscheidung des Feststoffanteils der Suspension mittels einer, vor der der Abscheideoberfläche gegenüberliegenden Hauptfläche der Membran äquidistant angeordneten, vorzugsweise verschiebbaren Elektrode bewirkt wird. Hiermit ist der Vorteil verbunden, daß für die Herstellung von Vorformen für optische Wellenleiter nach dem erfindungsgemäßen Verfahren artfremde Materialien für die Abscheideelektrode vermieden werden können, die eventuell zu Verunreinigungen des erhaltenen Grünkörpers führen können, wobei auch auf diese Weise hochpräzise optische Wellenleiter geschaffen werden können mit einem Stufenprofil des Brechungsindex, wenn für die Membran und den abzuscheidenden Grünkörper unterschiedlich dotierte Ausgangsmaterialien verwendet werden. Statt eines porösen, noch nicht gesinterten Grünkörpers als Membran kann auch eine poröser, angesinterter Körper aus dem Ausgangsmaterial für den Glaskörper als Membran eingesetzt werden. Hierbei ist besonders vorteilhaft, daß Schichten aus dem Feststoffanteil der Suspension mit einer gegenüber der für die Herstellung einer solchen Membran verwendeten Kornfraktion geänderten Kornfraktion hergestellt werden können. Von der Kornfraktion ist das Schwindungsverhalten eines Körpers abhängig; wenn als Membran ein bereits angesinterter Körper aus dem Ausgangsmaterial für den Glaskörper verwendet wird, ist es möglich, die Membran und die auf ihr abzuscheidende Schicht in ihren Schwindungsverhalten einander anzupassen. Bei dieser Abwandlung des erfindungsgemäßen Verfahrens werden Membran und abgeschiedener Grünkörper gemeinsam in einem Reinigungsschritt in einer geeigneten erhitzten Gasphase gereinigt und anschließend gemeinsam zu einem transparenten Glaskörper gesintert.

Wird der Feststoffanteil der Suspension nach einer vorteilhaften Weiterbildung des Verfahrens nach der Erfindung auf einer, auf der Abscheideelektrode angebrachten thermoplastischen und elektrisch leitenden Zwischenschicht, vorzugsweise aus 40 Gew.% Paraffin eines Schmelzpunktes von 46 bis 50°C und 60 Gew.% Graphitpulver, abgeschieden, ergibt sich der Vorteil, daß der auf der Abscheideelektrode abgeschiedene Grünkörper besonders leicht durch Erwärmen der Abscheideelektrode entformt werden kann. Die mit der Erfindung erzielbaren Vorteile bestehen weiter insbesondere darin, daß für die Herstellung von Glaskörpern, insbesondere Vorformen für optische Wellenleiter, mit einem sehr geringen apparativen Aufwand Grünkörper erhalten werden können, die einerseits porös genug sind, daß Verunreinigungen in einer erhitzten Gasatmosphäre wirkungsvoll entfernt werden können, die andererseits jedoch eine so hohe Dichte und Homogenität aufweisen, daß sie ohne weitere Zwischenbearbeitungsschritte, wie z.B. isostatisches Heißpressen, zu hochreinen Glaskörpern gesintert werden können. Ein weiterer Vorteil des Verfahrens der vorliegenden Erfindung ist, daß Grünkörper hergestellt werden können, die einen von einem kreisförmigen Querschnitt abweichenden Querschnitt aufweisen; zu denken ist z.B. an eckige Rohre oder Stäbe oder auch an beliebig geformte Hohlkörper. Die abgeschiedenen Grünkörper lassen sich rißfrei trocknen und ergeben nach dem Reinigungs- und Sinterschritt maßtreue, transparente und hochreine Gläser mit hochglatten Oberflächen.

Es ist weiter auch möglich, auf die beschriebene Weise hergestellte Quarzglasrohre bei der Herstellung von Halogen- oder Entladungslampen einzusetzen, wo ebenfalls, wie auch für Grünkörper, die für die Herstellung von optischen Wellenleitern verwendet werden sollen, ein Glas mit sehr niedrigem Wassergehalt und hohem Siliciumdioxidgehalt gefordert ist.

Durch das Abtrennen der Dispergierflüssigkeit von der festen Phase der Suspension über Elektrophorese bildet sich ein relativ trockener, fester Grünkörper, der gut handhabbar ist und der, ohne daß die Gefahr einer Rißbildung auftritt, in relativ kurzer Zeit von der geringen verbliebenen Restfeuchte befreit werden kann, z.B. durch Trocknen unter atmosphärischen Bedinungen oder durch Lösungsmittelaustausch.

Diese Trockenprozesse sind dem einschlägig tätigen Fachmann vertraut.

Ausführungsbeispiele der Erfindung sind in der Zeichnung dargestellt und werden im folgenden näher beschrieben. Es zeigen:

Figuren 1 und 2 Vorrichtungen zur Durchführung des Verfahrens nach der Erfindung im Schnitt zur Herstellung von rohrförmigen Grünkörpern,
Figur 3 Vorrichtung zur Durchführung des Verfahrens nach der Erfindung im Schnitt zur Herstellung von stabförmigen Grünkörpern.

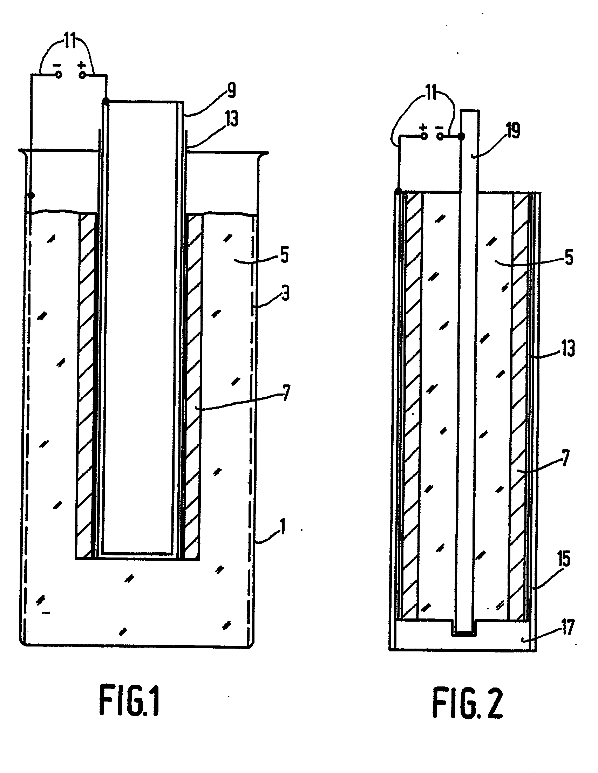

In Figur 1 ist eine Vorrichtung zur Herstellung eines rohrförmigen Grünkörpers 7 dargestellt. Dazu wird eine, z.B. in einem Ultraschallfeld homogenisierte, wasserfreie Suspension 5 aus hochdispersen $SiO_2$-Teilchen eines Durchmessers im Bereich von 10 bis 500 nm, vorzugsweise 15 bis 100 nm, mit einem mittleren Teilchendurchmesser von 40 nm mit einer elektrisch schwach leitenden, wasserfreien Flüssigkeit, insbesondere Äthanol, als Dispergierflüssigkeit (Feststoff:Dispergierflüssigkeit-Gewichtsverhältnis 1:1,5bis 1:8), der eine quartäre Ammoniumverbindung, insbesondere Tetramethylammoniumhydroxid (TMAH) in einer Menge von 0,1 bis 5 Gew.%, bezogen auf den Feststoffanteil in der Suspenpension, zugesetzt ist, in ein Gefäß 1 gegeben, in dem eine Gegenelektrode 3 in Form einer Gitterelektrode an der Wandung des Gefäßes 1 angeordnet ist. Weiter wird in dem Gefäß 1 und damit in der Suspension 5 in einem Abstand zur Gegenelektrode 3 eine Abscheideelektrode angeordnet, die in diesem Beispiel ein Zylinder 9 eines Außendurchmessers von 22 mm ist.

Die in die Suspension 5 eintauchende Abscheideelektrode (Zylinder 9) ist aus elektrisch leitendem, nichtmetallischem Material, vorzugsweise aus Graphit, und hat zu allen Punkten der Gegenelektrode 3 einen gleich großen Abstand. Die Abscheideelektrode in Form des Zylinders 9 wird zweckmäßigerweise mit einer thermoplastischen und elektrisch leitenden Schicht 13 einer Schichtdicke von etwa 1mm an der Abscheideoberfläche versehen, um das spätere Entfernen des auf dem Zylinder 9 abgeschiedenen Grünkörpers 7 zu erleichtern. Die Schicht 13 wird vorteilhafterweise aus einem Material hergestellt, das zu 40 Gew.% aus Paraffin eines Schmelzpunktes von 46 bis 50°C und zu 60 Gew.% aus Graphitpulver besteht. Zur Enformung eines abgeschiedenen Grünkörpers wird die Abscheideelektrode in Form des Zylinders 9 aus Graphit von innen her, z.B. durch heißes Wasser, erwärmt, wonach sich der auf der Schicht 13 abgeschiedene Grünkörper 7 leicht vom Zylinder 9 entfernen läßt. Bei Anlegen einer elektrischen Spannung aus einer nicht dargestellten Spannungsquelle an die Elektroden 3 und 9 über Elektrodenanschlüsse 11 wird der Grünkörper 7 als gleichmäßig dicke Schicht abgeschieden. Bei einer Spannung von 30V ergab sich eine Stromdichte von etwa 0,07 mA/cm² Elektrodenfläche; nach einer Abscheidungszeit von 15 min betrug die Schichtdicke des abgeschiedenen Grünkörpers 7 etwa 1,5 mm.

Der Abstand von Gegenelektrode 3 zu Abscheideelektrode (Zylinder 9) ist unkritisch und beeinflußt nicht ein gleichmäßiges Schichtwachstum.

In einem praktischen Ausführungsbeispiel unter Anwendung einer Vorrichtung nach Figur 1 wurde wie folgt verfahren: 100 g von im Handel erhältlichem $SiO_2$ einer Teilchengröße von 15-100 nm mit einem mittleren Teilchendurchmesser von 40 nm werden in 400 ml Äthanol und 4 ml Tetramethylammoniumhydroxid (TMAH) dispergiert, bis eine homogene Suspension erreicht ist. Eine Homogenisierung kann z.B. durch Einkoppeln eines Ultraschallfeldes einer Frequenz f=35 kHz in die Suspension erreicht werden. Diese Suspension wird wie zu Figur 1 beschrieben, nach Phasen getrennt und der erhaltene Grünkörper wird zur Entfernung der Restfeuchte langsam binnen 24 h an Luft getrocknet. Der auf diese Weise erhaltene Grünkörper weist eine Dichte von 52% der Dichte kompakten Quarzglases auf. Der wie oben beschrieben von der Abscheideelektrode entfernte Grünkörper wird anschließend über eine Dauer von 100 min auf eine Temperatur von 800°C erhitzt und zur Entfernung von Verunreinigungen, insbesondere Wasser und Übergangsmetalle, 1,5 h einem mit $SOCl_2$ gesättigten $O_2$-Gasstrom ausgesetzt. Die anschließende Sinterung erfolgt bei 1500°C in Heliumatmosphäre mit 2 Vol% Chlorgaszusatz, wobei der Grünkörper mit einer Absenkgeschwindigkeit von 3mm/min durch den Ofen geführt wird. Es wird ein transparentes Glasrohr eines Außendurchmessers von 19 mm und einer Wandstärke von 1,2 mm mit Verunreinigungen < 10 ppb erhalten. Das auf diese Weise hergestellte Glas hatte eine Dichte von 2,20 g/cm³ und einen Brechungsindex $n_D$=1,4598.

Nach dem beschriebenen Verfahren ist es ebenfalls möglich, Grünkörper mit Schichtstrukturen aus unterschiedlich dotierten $SiO_2$-Suspensionen zu erzeugen. Dazu wird die Suspension nach Erreichen der gewünschten Schichtdicke schnell aus der Vorrichtung abgesaugt und durch eine neue, anders dotierte Suspension ersetzt. Auf diese Weise lassen sich Grünkörper formen, die nach dem Sintern Gläser mit einem Brechungsindexgradienten ergeben.

In Figur 2 ist eine Vorrichtung dargestellt, mit der sich ebenfalls ein rohrförmiger Grünkörper 7 aus der Suspension 5 herstellen läßt. Hier ist die elektrophoretische Abscheidung eines Grünkörpers in einem, mit einem elektrisch isolierenden Boden 17 verschlossenen Rohr 15 als Abscheideelektrode dargestellt. Das Rohr 15 kann aus elektrisch leitendem Material, wie z.B. Graphit bestehen und ist an seiner Abscheideoberfläche zweckmäßigerweise mit einer thermoplastischen, elektrisch leitenden Schicht 13 versehen, die der besseren Entformung des innerhalb des Rohres abzuscheidenden Grünkörpers dient. Das Rohr 15 kann aber auch aus elektrisch isolierendem Material bestehen und hat dann an seiner Abscheideoberfläche innen eine elektrisch leitende thermoplastische Schicht 13 der oben beschriebenen Zusammensetzung. In dem Rohr 15 ist eine Innenelektrode 19 als Gegenelektrode angeordnet, die durch den Boden 17 zentriert ist. Das Rohr 15 kann einteilig oder auch geteilt mehrteilig ausgeführt sein. Bei der Abscheidung von Grünkörpern größerer Abmessungen wird bei einem mehrteiligen Rohr die Entformung erleichtert.

Die angewendete Suspension, die Abscheidebedingungen wie auch die Nachbearbeitung des erhaltenen Grünkörpers sowie die Eigenschaften des erhaltenen Quarzglaskörpers entsprechen dem zu Figur 1 beschriebenen Beispiel.

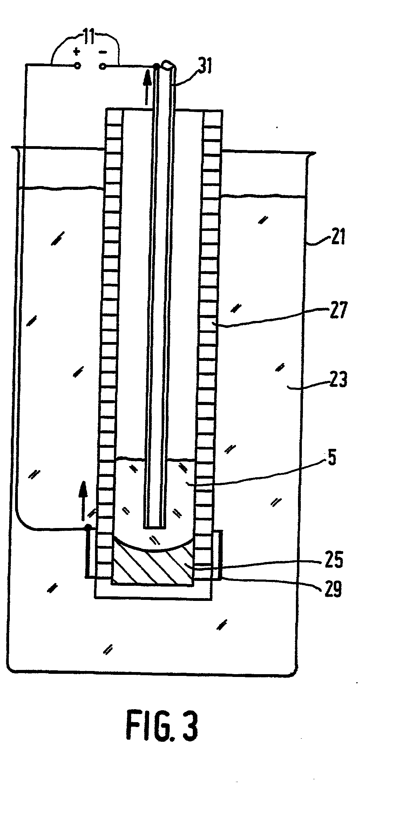

Es kann zur Herstellung von stabförmigen Grünkörpern 25 auch so verfahren werden, daß in ein Gefäß 21 eine der Form des herzustellenden Grünkörpers entsprechende poröse Membran 27 in Form eines Zylinders mit Poren eines Durchmessers kleiner als der mittlere Teilchendurchmesser der in der Suspension 5 enthaltenen Feststoffpartikel, für das beschriebene Ausführungsbeispiel also ≤ 40 nm, eingebracht wird, die an ihrer der Abscheideoberfläche abgekehrten Hauptfläche eine über diese Hauptfläche verschiebbare Elektrode in Form einer die Membran 27 umgebenden Ringelektrode 29 aufweist (vergleiche Figur 3). Das Gefäß 21 ist mit einer elektrisch leitenden Flüssigkeit 23, beispielsweise Wasser, gefüllt, das die poröse Membran 27 durchsetzt, so daß diese über die elektrisch leitende Flüssigkeit 23 mit einer nicht dargestellten Spannungsquelle elektrisch verbunden ist und als Zwischenelektrode, auf der die Feststoffpartikel der Suspension 5 abgeschieden werden, wirksam wird.

In die zylinderförmige Membran 27 ragt ein in Achsrichtung der Membran 27 verschiebbares Zulaufrohr 31 hinein, über welches nach Phasen zu trennendes Ausgangsmaterial in Form der Suspension 5 in die Membran 27 einleitbar ist. Das Zulaufrohr 31 ist aus elektrisch leitendem, vorzugsweise nichtmetallischem Material hergestellt und bildet die Gegenelektrode zur verschiebbaren Ringelektrode 29. Über die Elektrodenanschlüsse 11 sind beide Elektroden mit einer nicht dargestellten Spannungsquelle verbunden. Durch elektrophoretische Abscheidung des Feststoffanteils der Suspension 5 kann ein stabförmiger Grünkörper 25 unter kontinuierlichem Hochziehen des Zulaufrohres 31 in Richtung der Pfeile in Figur 3 innerhalb der Membran 27 abgeschieden werden. Die abgetrennte flüssige Phase der Suspension 5 kann am oberen Ende der Vorrichtung durch ein nicht dargestelltes Überlaufrohr aus der Vorrichtung entfernt werden.

Die angewendete Suspension, die Abscheidebedingungen wie auch die Nachbearbeitung des erhaltenen Grünkörpers sowie die Eigenschaften des erhaltenen Quarzglaskörpers entsprechen ebenfalls dem zu Figur 1 beschriebenen Beispiel.

## Patentansprüche

1. Verfahren zur Herstellung von Glaskörpern, bei dem aus dem Ausgangsmaterial für den Glaskörper in Form einer wasserfreien Suspension mit hochdispersem Feststoffanteil ein poröser Grünkörper geformt und dieser anschließend gereinigt und gesintert wird, dadurch gekennzeichnet, daß der Grünkörper (7, 25) durch Trennung der Phasen der Suspension (5) an einer, der Form des herzustellenden Glaskörpers entsprechenden Abscheideelektrode (9, 15, 27) mittels Elektrophorese abgeschieden wird.

2. Verfahren nach Anspruch 1, dadurch gekennzeichnet, daß als Ausgangsmaterial für den Glaskörper eine Suspension (5) eingesetzt wird, die $SiO_2$-Partikel eines Durchmessers im Bereich von 10 bis 500 nm, vorzugsweise 15 bis 100 nm, mit einem mittleren Teilchendurchmesser von 40 nm enthält.

3. Verfahren nach Anspruch 1 oder 2, dadurch gekennzeichnet, daß als Dispergierflüssigkeit eine elektrisch schwach leitende, wasserfreie Flüssigkeit eingesetzt wird.

4. Verfahren nach Anspruch 3, dadurch gekennzeichnet, daß als Dispergierflüssigkeit Äthanol eingesetzt wird.

5. Verfahren nach einem der Ansprüche 1 bis 4, dadurch gekennzeichnet, daß eine Suspension (5) mit einem Feststoff:Dispergierflüssigkeit-Gewichtsverhältnis von 1:1,5 bis 1:8 eingesetzt wird.

6. Verfahren nach einem der Ansprüche 1 bis 5, dadurch gekennzeichnet, daß der Suspension (5) ein ionogener, wasserfreier Zusatzstoff zugegeben wird, der den pH-Wert der Suspension in Richtung auf den basischen Bereich (pH ≤ 10) verschiebt.

7. Verfahren nach Anspruch 6, dadurch gekennzeichnet, daß als ionogener Zusatzstoff eine quartäre Ammoniumverbindung zugesetzt wird.

8. Verfahren nach Anspruch 7, dadurch gekennzeichnet, daß als ionogener Zusatzstoff Tetramethylammoniumhydroxid (TMAH) eingesetzt wird.

9. Verfahren nach einem der Ansprüche 6 bis 8, dadurch gekennzeichnet, daß der ionogene Zusatzstoff in einer Menge von 0,1 bis 5 Gew.%, bezogen auf den Feststoffanteil in der Suspension (5), zugegeben wird.

10. Verfahren nach einem der Ansprüche 1 bis 9, dadurch gekennzeichnet, daß auf der Abscheideelektrode (9, 15) ein Grünkörper (7) in Form eines Schichtkörpers durch Abscheiden mehrerer Schichten nacheinander aus unterschiedlich dotierten Suspensionen (5) abgeschieden wird.

11. Verfahren nach Anspruch 10, dadurch gekennzeichnet, daß Suspensionen (5) mit Dotierstoffen eingesetzt werden, die unterschiedliche Brechungsindices des herzustellenden Glaskörpers bewirken.

12. Verfahren nach einem der Ansprüche 1 bis 11, dadurch gekennzeichnet, daß auf der Abscheideelektrode (9, 15) eine thermoplastische und/oder elektrisch leitende Schicht (13) angebracht wird, auf der der Feststoffanteil der Suspension (5) abgeschieden wird.

13. Verfahren nach einem der Ansprüche 1 bis 12, dadurch gekennzeichnet, daß eine Abscheideelektrode (9, 15) aus einem nichtmetallischen, elektrisch leitenden Material eingesetzt wird.

14. Verfahren nach Anspruch 13, dadurch gekennzeichnet, daß eine Abscheideelektrode (9, 15) aus Graphit eingesetzt wird.

15. Verfahren nach Anspruch 12, dadurch gekennzeichnet, daß eine Abscheideelektrode (9, 15) aus einem elektrisch isolierenden Material eingesetzt wird, und daß auf der Abscheideelektrode eine elektrisch leitende Schicht (13) angebracht wird.

16. Verfahren nach Anspruch 12, dadurch gekennzeichnet, daß eine Schicht aus 40 Gew.% Paraffin eines Schmelzpunktes von 46 bis 50°C und 60 Gew.% Graphitpulver eingesetzt wird.

17. Verfahren nach einem der Ansprüche 1 bis 16, dadurch gekennzeichnet, daß eine, in einem Gefäß (21) mit einer leitenden Flüssigkeit (23) befindliche und von dieser leitenden Flüssigkeit durchsetzte, als Zwischenelektrode wirksame poröse Membran (27) in Form eines porösen Grünkörpers aus dem Ausgangsmaterial für den herzustellenden Glaskörper mit Poren eines Durchmessers kleiner als der mittlere Teilchendurchmesser des Feststoffanteils der in der Vorrichtung nach Phasen zu trennenden Suspension (5), auf der der Feststoffanteil der Suspension elektrophoretisch abgeschieden wird, eingesetzt wird, wobei die Abscheidung des Feststoffanteils der Suspension mittels einer, vor der der Abscheideoberfläche gegenüberliegenden Hauptfläche der Membran äquidistant angeordneten, vorzugsweise verschiebbaren Elektrode (29) bewirkt wird.

18. Verfahren nach einem der Ansprüche 1 bis 17, dadurch gekennzeichnet, daß der Feststoffanteil der Suspension (5) bei einer Stromdichte von 0,01 bis 100 mA/cm² Elektrodenfläche auf der Abscheideelektrode (9, 15, 27) abgeschieden wird.

19. Verfahren nach den Ansprüchen 1 bis 18, dadurch gekennzeichnet, daß der hergestellte Glaskörper als Vorform für optische Wellenleiter eingesetzt wird.

20. Verfahren nach den Ansprüchen 1 bis 18, dadurch gekennzeichnet, daß der hergestellte Glaskörper für Lampenkolben, insbesondere von Halogen- oder Gasentladungslampen, eingesetzt wird.

21. Vorrichtung zur Durchführung des Verfahrens nach den Ansprüchen 1 bis 18 mit einem Gefäß zur Aufnahme von nach Phasen zu trennendem Ausgangsmaterial in Form einer Suspension, gekennzeichnet durch eine der Form des herzustellenden Grünkörpers entsprechende Abscheideelektrode (9), die in die im Gefäß (1) enthaltene Suspension (5) eintaucht, mit einer in Form und Größe der Abscheideelektrode entsprechenden, im Gefäß in einem Abstand zur Abscheideelektrode angeordneten Gegenelektrode (3) und mit einer Spannungsquelle, die mit der Gegenelektrode und der Abscheideelektrode über Elektrodenanschlüsse (11) elektrisch verbunden ist.

22. Vorrichtung nach Anspruch 21, dadurch gekennzeichnet, daß die Abscheideelektrode (9) ein Zylinder ist, auf welchem ein rohrförmiger Grünkörper (7) abscheidbar ist.

23. Vorrichtung zur Durchführung des Verfahrens nach den Ansprüchen 1 bis 18 mit einem Gefäß zur Aufnahme von nach Phasen zu trennendem Ausgangsmaterial in Form einer Suspension gekennzeichnet durch ein der Form des herzustellenden Grünkörpers entsprechendes, die nach Phasen zu trennende Suspension enthaltendes, als Abscheideelektrode wirkendes Rohr (15) mit einem elektrisch isolierenden Boden (17), in das eine zu allen Punkten der Abscheideoberfläche äquidistante Innenelektrode (19) als Gegenelektrode eintaucht, wobei die Innenelektrode und das Rohr über Elektrodenanschlüsse (11) elektrisch mit einer Spannungsquelle verbunden sind.

24. Vorrichtung zur Durchführung des Verfahrens nach den Ansprüchen 1 bis 18 mit einem Gefäß zur Aufnahme einer elektrisch leitenden Flüssigkeit, gekennzeichnet durch eine der Form des herzustellenden Grünkörpers entsprechende, in die im Gefäß (21) enthaltene Flüssigkeit (23) eintauchende und von dieser Flüssigkeit durchsetzte, als Zwischenelektrode wirksame poröse Membran (27) mit Poren eines Durchmessers kleiner als der mittlere Teilchendurchmesser des Feststoffanteils der in der Vorrichtung nach Phasen zu trennenden Suspension (5), auf der der Feststoffanteil der Suspension abgeschieden wird und vor deren, der Abscheideoberfläche gegenüberliegenden Hauptfläche eine vorzugsweise verschiebbare Elektrode in einem Abstand angeordnet ist, mit einem, in die Membran hineinragenden, verschiebbaren Zulaufrohr (31) aus elektrisch leitendem Material, über welches die Suspension in die Membran einleitbar ist und mit einer Spannungsquelle, die mit dem Zulaufrohr und mit der über die Membran vorzugsweise verschiebbaren Elektrode über Elektrodenanschlüsse (11) elektrisch verbunden ist.

25. Vorrichtung nach Anspruch 24, dadurch gekennzeichnet, daß die Membran (27) ein Zylinder ist, in welchem ein stabförmiger Grünkörper (25) durch Verschieben einer die Membran umgebenden Ringelektrode (29) in Achsrichtung abscheidbar ist.

26. Vorrichtung nach Anspruch 25, dadurch gekennzeichnet, daß die Membran (27) ein poröser Grünkörper aus dem Ausgangsmaterial für den herzustellenden Glaskörper ist.

27. Vorrichtung nach einem der Ansprüche 21 bis 23, dadurch gekennzeichnet, daß die Abscheideelektrode (9, 15) auf der Abscheideoberfläche mit einer thermoplastischen und/oder elektrisch leitenden Schicht (13) versehen ist.

28. Vorrichtung nach Anspruch 27, dadurch gekennzeichnet, daß die Schicht aus 40 Gew.% Paraffin eines Schmelzpunktes von 46 bis 50°C und 60 Gew.% Graphitpulver besteht.

29. Vorrichtung nach Anspruch 27 oder 28, dadurch gekennzeichnet, daß die Abscheideelektrode (9, 15) aus einem nichtmetallischen, elektrisch leitenden Material besteht.

30. Vorrichtung nach Anspruch 29, dadurch gekennzeichnet, daß die Abscheideelektrode (9, 15) aus Graphit besteht.

31. Vorrichtung nach Anspruch 27 oder 28, dadurch gekennzeichnet, daß die Abscheideelektrode (9, 15) aus einem elektrisch isolierenden Material besteht und auf der Abscheideoberfläche mit einer elektrisch leitenden Schicht (13) verbunden ist.

## Claims

1. A method of manufacturing glass bodies, in which the starting material for the glass body, being an anhydrous suspension having a microdispersed solids content, is used to form a porous green body which is subsequently purified and sintered, characterized in that by separating the phases of the suspension (5) the green body (7, 25) is deposited by means of electrophoresis on a deposition electrode (9, 15, 27) whose shape corresponds to that of the glass body to be produced.

2. A method as claimed in Claim 1, characterized in that a suspension (5) is used as the starting material for the glass body, which suspension comprises $SiO_2$ particles having a diameter in the range from 10 to 500 nm, preferably from 15 to 100 nm, the average particle diameter being 40 nm.

3. A method as claimed in Claim 1 or 2, characterized in that a poorly electrically conductive, anhydrous liquid is used as the dispersing liquid.

4. A method as claimed in Claim 3, characterized in that ethanol is used as the dispersing liquid.

5. A method as claimed in any one of the Claims 1 up to and including 4, characterized in that a suspension (5) is used having a solid : dispersing liquid weight ratio from 1:1.5 to 1:8.

6. A method as claimed in any one of the Claims 1 up to and including 5, characterized in that an ionogenic, anhydrous additive is added to the suspension (5), which moves the pH value of the suspension towards alkalinity (pH < 10).

7. A method as claimed in Claim 6, characterized in that a quaternary ammonium compound is added as the ionogenic additive.

8. A method as claimed in Claim 7, characterized in that tetramethyl ammonium hydroxide (TNAH) is used as the ionogenic additive.

9. A method as claimed in any one of the Claims 6 up to and including 8, characterized in that the ionogenic additive is added in a quantity of from 0.1 to 5 % by weight of the solids content of the suspension (5).

10. A method as claimed in any one of the Claims 1 up to and including 9, characterized in that a green body (7) in the form of a laminated body is formed on the deposition electrode (9, 15) by depositing several successive layers of differently doped suspensions (5).

11. A method as claimed in Claim 10, characterized in that doped suspensions (5) are used which produce different refractive indices of the glass body to be produced.

12. A method as claimed in any one of the Claims 1 up to and including 11, characterized in that a thermoplastic and/or an electrically conductive layer (13) are/is provided on the deposition electrode (9, 15), on which layer the solids content of the suspension (5) is deposited.

13. A method as claimed in any one of the Claims 1 up to and including 12, characterized in that a deposition electrode (9, 15) is used which is made of a non-metallic, electrically conductive material.

14. A method as claimed in Claim 13, characterized in that a graphite deposition electrode (9, 15) is used.

15. A method as claimed in Claim 12, characterized in that a deposition electrode (9, 15) is used which is made of an electrically insulating material, and on which deposition electrode an electrically conductive layer (13) is provided.

16. A method as claimed in Claim 12, characterized in that a layer comprising 40 % by weight of paraffin, having a melting point of from 46 to 50°C, and 60 % by weight of graphite powder is used.

17. A method as claimed in any one of the Claims 1 up to and including 16, characterized in that a porous membrane (27) is used which is provided in a vessel (21) containing a conducting liquid (23) which permeates the porous membrane which serves as an intermediate electrode and which is in the form of a porous green body manufactured from the starting material for the glass body to be manufactured having pores with a diameter smaller than the average particle diameter of the solids content of the suspension (5) to be separated into phases in the arrangement, and on which membrane the solids content of the suspension is deposited electrophoretically, said deposition of the solids content of the suspension being carried out by means of a preferably movable electrode (29) which is arranged equidistantly in front of the principal surface of the membrane, which surface faces the deposition surface.

18. A method as claimed in any one of the Claims 1 up to and including 17, characterized in that the solids content of the suspension (5) is deposited on the deposition electrode (9, 15, 27) at a current density of from 0.01 to 100 mA/$cm^2$ of electrode area.

19. A method as claimed in any one of the Claims 1 up to and including 18, characterized in that the glass body manufactured is used as a preform for optical waveguides.

20. A method as claimed in any one of the Claims 1 up to and including 18, characterized in that the glass body manufactured is used for lamp envelopes of, in particular, halogen or gas discharge lamps.

21. An arrangement for carrying out the method as claimed in any one of the Claims 1 up to and including 18, comprising a vessel for holding starting material in the form of a suspension which is to be separated into phases, characterized by a deposition electrode (9) whose shape corresponds to that of the green body to be produced and which is introduced in the suspension (5) contained in the vessel (1), having a counter electrode (3) which as to shape and size corresponds to the deposition electrode and which is arranged in the vessel so as to be spaced from the said deposition electrode, and having a power source which is electrically connected to the counter electrode and the deposition electrode through electrode terminals (11).

22. An arrangement as claimed in Claim 21, characterized in that the deposition electrode (9) is a cylinder, onto which a tubular green body (7) can be deposited.

23. An arrangement for carrying out the method as claimed in any one of the Claims 1 up to and including 18, comprising a vessel for holding starting material in the form of a suspension which is to be separated into phases, characterized by a tube (15) the shape of which corresponds to that of the green body to be produced, which holds the suspension to be separated into phases, and which functions as a deposition electrode and which has an electrically insulating bottom part (17), an inner electrode (19) being introduced into the tube as a counter electrode which is located equidistantly from each point on the deposition surface, the inner electrode and the tube being electrically connected to a power source, through electrode terminals (11).

24. An arrangement for carrying out the method as claimed in any one of the Claims 1 up to and including 18, comprising a vessel for holding an electrically conductive liquid, characterized by a porous membrane (27) whose shape corresponds to that of the green body to be produced, which membrane is introduced into the liquid (23) contained in the vessel (21) and is permeated thereby, and serves as a deposition electrode, the pores of the membrane having a diameter smaller than the average particle diameter of the solids content of the suspension (5) which is to be separated into phases in the arrangement, on which membrane the solids content of the suspension is deposited and a preferably movable electrode being arranged in front of and spaced from the principal surface of said membrane, which surface faces the deposition surface, which vessel comprises a movable feeder tube (31) which is made of an electrically conductive material and which projects into the membrane, via which feeder tube the suspension can be introduced into the membrane, which vessel has a power source which is electrically connected to the feeder tube and the electrode which is preferably movable along the membrane, through electrode terminals (11).

25. An arrangement as claimed in Claim 24, characterized in that the membrane (27) is a cylinder in which a rod-shaped green body (25) can be deposited by axially moving a ring electrode (29) which surrounds the membrane.

26. An arrangement as claimed in Claim 25, characterized in that the membrane (27) is a porous green body made of the starting material for the glass body to be produced.

27. An arrangement as claimed in any one of the Claims 21 up to and including 23, characterized in that at the location of the deposition area the deposition electrode (9, 15) is provided with a thermoplastic and/or electrically conductive layer (13).

28. An arrangement as claimed in Claim 27, characterized in that the layer comprises 40 % by weight of paraffin, having a melting point of from 46 to 50°C, and 60 % by weight of graphite powder.

29. An arrangement as claimed in Claim 27 or 28, characterized in that the deposition electrode (9, 15) consists of a non-metallic, electrically conductive material.

30. An arrangement as claimed in Claim 29, characterized in that the deposition electrode (9, 15) is made of graphite.

31. An arrangement as claimed in Claim 27 or 28, characterized in that the deposition electrode (9, 15) is made of an electrically insulating material and that an electrically conductive layer (13) is provided on the deposition area.

**Revendications**

1. Procédé pour la fabrication de corps en verre selon lequel un semi-produit poreux est formé à partir du matériau de départ pour le corps en verre sous forme d'une suspension anhydre présentant une part de substance solide fortement dispersée, après quoi le semi-produit est purifié et fritté, caractérisé en ce que le semi-produit (7, 25) est séparé par séparation des phases de la suspension (5) par électrophorèse à une électrode de séparation (9, 15, 27) correspondant à la forme du corps en verre à réaliser.

2. Procédé selon la revendication 1, caractérisé en ce que comme matériau de départ pour le corps en verre est utilisée une suspension (5) contenant des particules de $SiO_2$ d'un diamètre situé dans la gamme de 10 à 500 nm, de préférence 15 à 100 nm, le diamètre moyen des particules étant de 40 nm.

3. Procédé selon la revendication 1 ou 2, caractérisé en ce qu'un liquide anhydre faiblement conducteur est utilisé comme dispersant.

4. Procédé selon la revendication 3, caractérisé en ce que de l'éthanol est utilisé comme dispersant.

5. Procédé selon l'une des revendications 1 à 4, caractérisé par l'utilisation d'une suspension (5) dans un rapport en poids substance solide:dispersant 1:1,5 à 1:8.

6. Procédé selon l'une des revendications 1 à 5, caractérisé en ce que la suspension (5) est additionnée d'un agent d'addition anhydre ionogène qui déplace la valeur pH de la suspension dans la direction de la gamme basique (pH ≤10).

7. Procédé selon la revendication 6, caractérisé en ce qu'un composé d'ammonium quaternaire est ajouté comme agent d'addition ionogène.

8. Procédé selon la revendication 7, caractérisé en ce que l'hydroxyde de tétraméthylammonium est utilisé comme agent d'addition ionogène.

9. Procédé selon l'une des revendications 6 à 8, caractérisé en ce que la substance d'addition ionogène est ajoutée dans une quantité de 0,1 à 5% en poids rapporté à la part de substance solide dans la suspension (5).

10. Procédé selon l'une des revendications 1 à 9, caractérisé en ce que sur l'électrode de séparation (9, 15) est déposé un semi-produit (7) sous forme d'un corps en couches par séparation successive de plusieurs couches à partir de suspensions à dopage différent (5).

11. Procédé selon la revendication 10, caractérisé par l'utilisation de suspensions (5) contenant des agents d'addition provoquant des indices de réfraction différents du corps en verre à réaliser.

12. Procédé selon l'une des revendications 1 à 11, caractérisé en ce que sur l'électrode de séparation (9, 15) est appliquée une couche thermoplastique et/ou électroconductrice (13) sur laquelle est déposée la part de substance solide de la suspension (5).

13. Procédé selon l'une des revendications 1 à 12, caractérisé par l'utilisation d'une électrode de séparation (9, 15) en un matériau non métallique électroconducteur.

14. Procédé selon la revendication 13, caractérisé par l'utilisation d'une électrode de séparation (9, 15) en graphite.

15. Procédé selon la revendication 12, caractérisé par l'utilisation d'une électrode de séparation (9, 15) en un matériau électroconducteur et par l'application d'une couche électroconductrice (13) sur l'électrode de séparation.

16. Procédé selon la revendication 12, caractérisé par l'utilisation d'une couche constituée par 40% en poids de paraffine d'un poids de fusion de 46 à 50°C et 60% en poids de poudre de graphite.

17. Procédé selon l'une des revendications 1 à 16, caractérisé en ce qu'on utilise une membrane poreuse (27) disposée dans un récipient (21) contenant un liquide conducteur (23) et traversé par ce liquide conducteur, faisant office d'électrode intermédiaire réalisée sous forme d'un semi-produit poreux du matériau de départ pour le corps en verre à réaliser présentant des pores d'un diamètre inférieur au diamètre moyen des particules de la part de matière de la suspension (5) à séparer en phases dans le dispositif, dans laquelle est introduite la suspension par l'intermédiaire d'un tube d'amenée déplaçable électroconducteur muni d'une connexion d'électrode et sur laquelle est déposée par voie électrophorétique la part de substance solide de la suspension, la séparation de la part de substance solide de la suspension étant effectuée à l'aide d'une électrode de préférence déplaçable (29) disposée de façon équidistante devant la face principale de la membrane située en vis-à-vis de la face de séparation.

18. Procédé selon l'une des revendications 1 à 17, caractérisé en ce que la part de substance de la suspension (5) est déposée à une densité de courant de 0,01 à 100 mA/cm² de surface d'électrode sur l'électrode de séparation (9, 15, 27).

19. Procédé selon les revendications 1 à 18, caractérisé par l'utilisation du corps en verre réalisé comme préforme pour des guides d'ondes optiques.

20. Procédé selon la revendication 1 à 18, caractérisé par l'utilisation du corps en verre réalisé pour des ampoules de lampe, notamment des lampes à décharge dans le gaz ou à l'halogène.

21. Dispositif pour la mise en œuvre du procédé selon la revendication 1 à 18 comportant un récipient pour la réception du matériau de départ à séparer en phase sous forme d'une suspension, caractérisé par une électrode de séparation (9) correspondant à la forme du semi-produit à réaliser et immergée dans la suspension (5) contenue dans le récipient (1), muni d'une contre-électrode (3) dont la forme et la grandeur correspondent à celles de l'électrode de séparation et qui est disposée à une certaine distance de l'électrode de séparation et d'une source de tension qui est connectée à la contre-électrode et à l'électrode de séparation par l'intermédiaire de connexions d'électrode (11).

22. Dispositif selon la revendication 21, caractérisé en ce que l'électrode de séparation (9) est un cylindre sur lequel peut être déposé un semi-produit tubulaire (7).

23. Dispositif pour la mise en œuvre du procédé selon la revendication 1 à 18 comportant un récipient pour la réception du matériau de départ à séparer en phases sous forme d'une suspension, caractérisé par un tube (15) présentant un fond électro-isolant (17) et faisant office d'électrode de séparation dont la forme correspond à celle du semi-produit à réaliser et qui contient une suspension à séparer en phases, dans lequel est immergée une électrode intérieure (19) comme contre-électrode qui est équidistante par rapport à tous les points de la surface de séparation, l'électrode intérieure et le tube étant connectés par l'intermédiaire de connexions d'électrode (11) à une source de tension.

24. Dispositif pour la mise en œuvre du procédé selon la revendication 1 à 18, comportant un récipient pour la réception d'un liquide électroconducteur, caractérisé par une membrane poreuse (27) faisant office d'électrode intermédiaire, dont la forme correspond à celle du semi-produit à réaliser et qui est immergée dans le liquide (23) contenu dans le récipient (21) et qui est traversé par ce dernier, dont les pores présentent un diamètre inférieur au diamètre moyen des particules de matière solide de la suspension (5) à séparer en phases dans le dispositif, sur laquelle est déposée la part de substance solide de la suspension et devant la surface principale opposée à la surface de séparation de laquelle est disposée une électrode de préférence déplaçable à une certaine distance avec un tube d'arrivée déplaçable (31) en matériau électroconducteur introduit dans la membrane, par lequel la suspension peut être introduite dans la membrane et comportant une source de tension qui est connectée au tube d'amenée et à l'électrode de préférence déplaçable sur la membrane par l'intermédiaire de connexions d'électrode (11).

25. Dispositif selon la revendication 24, caractérisé en ce que la membrane (27) est un cylindre dans laquelle peut être déposé un semi-produit en forme de barre (25) par déplacement dans la direction axiale d'une électrode annulaire (29) entourant la membrane.

26. Dispositif selon la revendication 25, caractérisé en ce que la membrane est un semi-produit poreux du matériau de départ pour le corps en verre à réaliser.

27. Dispositif selon l'une des revendications 21 à 23, caractérisé en ce que sur la surface de séparation, l'électrode de séparation (9, 15) est munie d'une couche thermoplastique et/ou électroconductrice (13).

28. Dispositif selon la revendication 27, caractérisé en ce que la couche est constituée par 40% en poids de paraffine à point de fusion de 46 à 50°C et 60% en poids de poudre de graphite.

29. Dispositif selon la revendication 27 ou 28, caractérisé en ce que l'électrode de séparation (9, 15) est constituée par un matériau non métallique électroconducteur.

30. Dispositif selon la revendication 29, caractérisé en ce que l'électrode de séparation (9, 15) est constituée par du graphite.

31. Dispositif selon la revendication 27 ou 28, caractérisé en ce que l'électrode de séparation (9, 15) est constituée par un matériau électro-isolant et sa surface de séparation est munie d'une couche électroconductrice (13).

FIG.1

FIG.2

EP 0 196 718 B1

FIG. 3